Europäisches Patentamt

(19) European Patent Office

Office européen des brevets

(11) Publication number: **0 186 412**
**A2**

(12) **EUROPEAN PATENT APPLICATION**

(21) Application number: **85309177.5**

(22) Date of filing: **17.12.85**

(51) Int. Cl.⁴: **F 24 J 2/46**
**F 24 J 2/34, F 24 J 2/04**

(30) Priority: **17.12.84 AU 8598/84**

(43) Date of publication of application:
**02.07.86 Bulletin 86/27**

(84) Designated Contracting States:
**AT BE CH DE FR GB IT LI LU NL SE**

(71) Applicant: **Joming Solar Systems SDN. BHD**
**11-A Jalan Kapal**
**Butterworth Province Wellesley(MY)**

(72) Inventor: **Chong, Boo Jock**
**11-A Jalan Kapal Butterworth**
**Province Wellesley(MY)**

(74) Representative: **Frost, Dennis Thomas et al,**
**WITHERS & ROGERS 4 Dyer's Buildings Holborn**
**London, EC1N 2JT(GB)**

(54) **Solar collection and heating.**

㊿ A solar collector comprising a thin conductive metal plate (13) having an ultra-thin coating film thereon, the plate being a blue colour which is selective to the solar spectrum in the range 475–495 nm and a solar heating system comprising such a plate. The invention also includes a solar heater having a collector plate (22) mounted in a receiver (24) in such a way as to define volumes thereabove and therebeneath, the volume thereabove having, as a wall opposite the collector plate, a sheet of glass or other thermally transmitting medium (23) and means (25, 26, 28, 29) whereby fluid can enter and leave the receiver. The invention also includes an air heating system comprising a number of such solar heaters interconnected so that air can sequentially pass through the volumes defined by the collector plate (22) and the glass surface (23) and then through secondary channels beneath the collector plate.

EP 0 186 412 A2

## SOLAR COLLECTION AND HEATING

This invention relates to improvements in solar heating and, specifically, to aspects of solar heating which include improved solar collectors, improved solar hot water systems, enhanced heat/solar air collectors and systems using such collectors.

It is an object of this invention to provide components and systems which reflect these various improvements.

In the first aspect of the invention, we provide a solar collector comprising a thin conductive metal plate, having an ultra-thin conducting film thereon, the plate being a blue colour which is selective to the solar spectrum in the range 475 to 495 nm. This aspect of the invention also includes such a collector in which the thin conducting film includes silver granules which provide good heat transfer to the plate.

In its second aspect, this invention comprises a solar heating system which makes use of a collector plate, as described hereinabove, means in thermal relationship with the collector plate whereby a fluid to be heated, can be brought into effective contact with the plate, means whereby the heated fluid can be removed from the plate and storage means whereby the fluid can be stored or can transmit its energy to a storage medium.

It is preferred that the plate is located in a receiver and wherein there is a manifold along one side of the plate to receive the fluid to be heated, a manifold on the other side of the plate from which the fluid to be heated can be passed, the manifolds being in connection with each other, the connection means being in heat exchange relationship with the plate.

The invention, in another aspect, includes an enhanced heat/air collector which comprises a collector plate mounted in a receiver in such a way as to define volumes thereabove and therebeneath, the volume thereabove having, as a wall opposite the collector plate, a sheet of glass or other thermally transmitting medium and means whereby fluid can enter and leave the receiver both above and below the collector plate.

In one particular form of the invention, cylindrical extensions are located on the collector plate.

The arrangement of the collector plate may be such as to provide a plurality of secondary channels through the compartment beneath the surface thereof whereby air, which has previously been heated by passage through one or more collectors, may have this heat enhanced.

In order that the invention may be more readily understood, we shall describe, in relation to the accompanying drawings, embodiments of the various aspects of the invention.

In these drawings:-

Fig. 1    is a perspective view, from above, of the solar heating system;

Fig 2     is a section along line 2-2 of the solar collector of the heating system of Fig. 1;

Fig. 3    is a section similar to that of Fig. 2 showing a form of solar collector for use in air heating;

Fig. 4    is a view along line 4-4 of Fig. 3 looking in the direction of the arrows and showing a partial plan view of the solar collector of Fig. 3;

Fig. 5    is a view along line 5-5 of Fig. 3 looking in the direction of the arrows and showing the form of ducts which form secondary channels at the collector plate: and

Fig. 6    is a schematic view showing a group of the collectors of Figs. 3 to 5 interconnected.

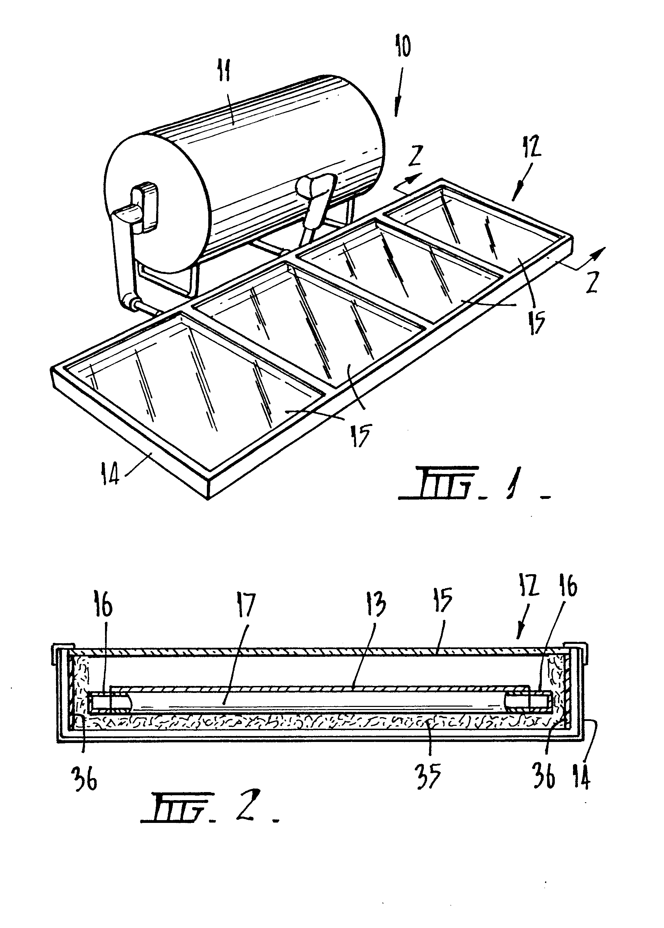

The view of Fig. 1 shows a relatively small capacity hot water system 10 which can provide an efficient, but nevertheless economic, supply of water.

This system uses a collector 12 made in accordance with the invention, which will be described later herein.

Of course, by making the collector large or by banking a large number of collectors, we can supply very much larger systems.

In the preferred form, we arrange the tank 11 of the system to be located closely adjacent the collector assembly 12 and the tank is insulated so that the heat loss, over the night time hours, during which loss would be greatest, is minimised.

The system may be provided with valves, not illustrated, so there cannot be a reverse flow of water during cooler periods.

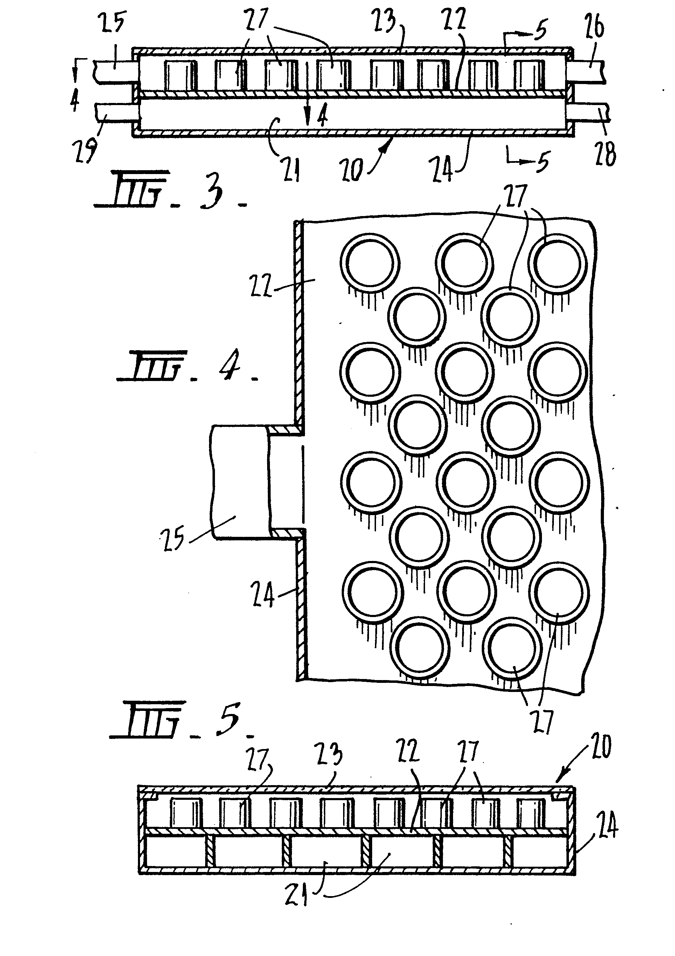

The collector plate 13, best seen in Fig. 2, is, in use, located in a compartment or receiver 14, as is conventional with solar collectors, and is preferably covered with glass 15 or the like which has the required heat transmission properties at the wavelength which is to be used.

The interior of the compartment 14 may have an insulating material 35 therein and the glass plate 15 may be supported on support 36 of an insulating material.

Preferably, we provide headers 16 extending across the width of the collector at opposite sides thereof, and risers 17 extending therebetween.  We have found that, if we make the risers of square or rectangular pipe having good thermal conductivity, a good heat transfer relationship with the collector plate is possible.

The connection between the header and riser across the plate can take conventional forms as are know in the art.

The collector plate 13 can be a very thin plate, and we prefer to provide an aluminium plate of a thickness of the order of 0.3 mm, and, on this, we deposit an ultra-thin heat conducting, film which is preferably dyed blue.

The film may incorporate silver granules which provide a heat path from the film to the plate and, thus, permits good heat transfer from the collecting film to the plate.

The dye, which provides the colouring on the plate, is selected to be blue as this provides a good absorption of the highest energy density portion of the solar spectrum in the range of 475-495 nm. This colouring may be made photographically

-4-

and the colour is selected to provide absorption in the required range.

The collector, as a whole, provides a high degree of thermal conductivity to the water or other heat transfer medium with which the collector is in contact, provides a high absorptance at the required wave length and yet which provides low emittance over the whole of the spectral range.

The collector, thus, exhibits a good overall performance.

We have illustrated, in Fig. 1, a system which could be considered to use one long collector plate or which could use four discrete collector plates which have their headers interconnected.

In this way we can make a system which has whatever thermal capacity we desire, simply by locating a greater number of collector plates effectively in parallel so that the headers for each of these is effectively at the temperature of the coolest part of the water in the tank 11 and each of which return water to the tank at approximately the same, raised, temperature.

The invention also applies to a solar air heater.

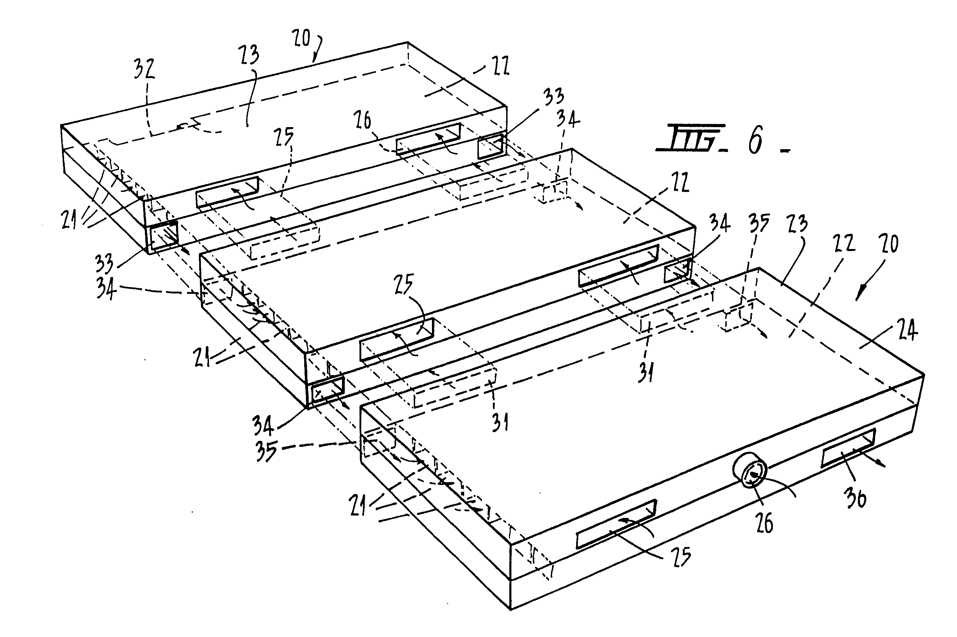

In the embodiment of Figs. 3 to 5, we show a collector which is adapted to heat air although the same principle could be applied to a collector for heating water.

These collectors may be interconnected to give an enhanced heating operation, and this is illustrated in Fig. 6. We shall first describe the formation of a single collector which can be the collector 40 of Fig. 6 and shall then define the inter-relationship between a number of collectors.

Each collector may have a surround, which comprises a receiver 24 and in which is located a number of ducts 21, the upper surfaces 22 of which abut and comprise the collector plate. Above the collector plate, we locate a glass cover 23 which is largely transparent to the solar energy to be recovered.

The surface 22 of the collector plate is below the top of the receiver 20 and ducts or the like 25, 26 are provided to permit air to be passed into the volume between the surface 22 and the glass 23, and over the plate to outlet 31.

Whilst this is shown to be done by providing ducts 25, 26 in the side of the receiver which open into this area, air could be permitted to enter through the floor of the plate or, alternatively, directly into the area above the plate.

The plate, apart from being formed of a number of ducts 21, also differs from previously used plates in that its overall surface area is enhanced by the location therein of a large number of of open topped cylindrical members 27 which can each be considered to be individual collectors/radiators.

Each of these members 27 is in heat exchange relationship with the plate 22.

These members can be seen to be equivalent to open topped cans and there can be of the order of sixty to ninety of these on a plate which may be of the order of 8 ft. by 4 ft.

When the solar energy passes into the receiver to the collector, these cans are substantially warmed, and, whilst they transmit heat by conduction to the plate, they also provide a good means whereby heat may be transmitted to ambient air passing into the volume through duct 25, across the plate 22 and around the cans 27.

The heated air which passes out from this volume may, if required, be passed to a similar area of a second collector, and so on, until the air approaches the required temperature, which is something less than the temperature reached by the collector plate and the cylinders.

As illustrated, the ducts 21 form a series of secondary channels below the collector plate.

In this arrangement, a secondary variation of temperature of air can be achieved by passing heated air through the ducts 21.

As mentioned, the collector of Figures 3 to 5 can be the first of a number of collectors and the arrangement is such that air can be passed into this collector either through duct 25 or duct 26 and heated passing over the upper surface of plate 22 and around the warm cans 27. This heated air leaves through duct 31 where it can enter the next collector through ducts similar to duct 25 in this collector and, it again, passes in the volume between the collector plate 22 and the glass 23, and around the cans 27, and leaves this collector through ducts similar to duct 31 where it can again pass to a further collector and so on.

Fig. 6 shows such an arrangement. In this Figure, for ease of understanding and convenience of illustration, the open topped cylindrical members 27 are not shown.

As illustrated in Fig. 6, there are three such collectors and the outlet air from the third collector is transmitted through the floor of the collector by way of duct 32 where it caused to pass therebeneath and leaves the collector through duct 33 where it then passes into the next collector through 34 and is caused to move along the ducts 21 of this connector so that there is a heat transfer relationship between the air and the plate 22, and as the air would normally be hotter than the plate 22 there would be a certain amount of heat loss to this plate which, in turn, would be transmitted to the air passing over the plate 32 and the air leaves through duct 34 to the first collector by way of duct 35 where it again passes through duct 21 and leaves the collector through duct 36.

Again this air will be hotter than the air imput through ducts 25 and 26, and will transmit heat to the plate 22.

It will be seen that after air has been flowing for a certain time an equilibrium situation will be reached whereby the outlet air temperature through duct 36 will be relatively high, but the temperatures of the various collectors will be kept at such a temperature as to operate efficiently as the excess temperature of the outlet air will cause heating of the inlet air.

In practice we can obtain an output temperature of $77^0$C with a substantial volume flow using three collectors whereas it would not be possible to obtain such a temperature at such a flow if a single pass through collectors was used.

The outlet air from duct 36 may be provided to a heat bank 30 or may be provided direct to a drying room or for any other purpose.

The air passing into the ducts 25 and 26 may, if required, be a combination of air which has already been through a heating process and fresh air to make up the air lost in the system.

In one particular arrangement, we may provide a number of banks of collectors of the type referred to hereinabove, and the hot air obtained can either be used to heat a storage bed, which may comprise rocks, concrete or the like with passages therethrough through which hot air can pass and in which a substantial percentage of the heat of the air is transmitted to the solid material, or directly to a drying chamber, which may be a chamber which is adapted to carry, say, racks or the like, onto which material to be dried can be located and through which the air can pass to effect the drying.

The operation may be done under thermostatic control so that the temperature in the drying area is restricted so as to be insufficient to damage the product being dried, and this can be done either by passing a greater quantity of air through the collectors to drop the overall temperature of the air, whilst providing an increased volume, or by tempering the air with ambient air to a required temperature, or by using some of the air for drying and transmitting the remainder to a heat storage.

0186412

CLAIMS:

1.   A solar collector comprising a thin conductive metal plate (13), having an ultra-thin conducting film thereon, the plate being a blue colour which is selective to the solar spectrum in the range 475 to 495 nm.

2.   A collector plate as claimed in claim 1 in which the thin conducting film includes silver granules which provide good heat transfer to the plate.

3.   A solar heating system comprising a collector plate as claimed in claim 1, means (16,17) in thermal relationship with the collector plate whereby a fluid to be heated, can be brought into effective contact with the plate, means whereby the heated fluid can be removed from the plate and storage means (11) whereby the fluid can be stored or can transmit its energy to a storage medium.

4.   A system as claimed in claim 3 wherein the plate is located in a receiver (14) and wherein there is a manifold (16) along one side of the plate to receive the fluid to be heated, a manifold (16) on the other side of the plate from which the fluid to be heated can be passed, the manifolds being in connection with each other, the connection means (17) being in heat exchange relationship with the plate.

5.   A system as claimed in claim 4 wherein the fluid is water and the storage means (11) is a tank whereby the water can be retained, the arrangement being such that water is permitted to circulate from the tank to the absorber plate whereby heat is transferred thereto, and back to the tank.

6.   As system as claimed in claim 5 wherein valve means are provided to prevent water leaving the tank when the temperature of the water is higher than the temperature of the plate.

7.   A solar heater for fluids comprising a collector plate (22) mounted in a receiver (24) in such a way as to define volumes thereabove and therebeneath, the volume thereabove having, as a wall opposite the collector plate, a sheet of glass or other thermally transmitting medium (23) and means (25,26,28,29) whereby fluid can enter and leave the receiver both above and below the collector plate (22)

0186412

8.  A solar heater as claimed in claim 7 wherein, mounted on the top surface of the collector plate, there is a number of open topped cylindrical members (27) which can act as heat transfer members to fluid passing through the volume.

9.  A solar heater as claimed in claim 8 wherein the collector plate is comprised by one surface of a number of ducts (21) lying closely adjacent and wherein the passage of fluid beneath the collector plate is constrained by these ducts.

10. An air heating system comprising at least one collector as claimed in claim 7 and a heat transfer medium and means whereby fluid can be passed between the heat transfer medium and the solar heaters.

11. An air heating system as claimed in claim 10 comprising at least two solar heaters as claimed in claim 9, the arrangement being such that air to be heated is passed sequentially through the volumes defined by the collector plate (22) and the glass surface (23) of the collector and then through the secondary channels provided by the ducts in at least one of the collectors.

12. An air heating system as claimed in claim 11 wherein the heated air is passed to a heat transfer chamber or a heat storage bed.

FIG. 1.

FIG. 2.

0186412

FIG. 3.

FIG. 4.

FIG. 5.

_FIG_ 6 _

0186412